# EUROPÄISCHE PATENTSCHRIFT

(11) **EP 0 812 398 B1**
(45) Veröffentlichungstag und Bekanntmachung des Hinweises auf die Patenterteilung: **23.09.1998**
(21) Anmeldenummer: 96904843.8
(22) Anmeldetag: 22.02.1996
(51) Int. Cl.: F16D 23/06

(54) **LAMELLENSYNCHRONISIERUNG**
DISK SYNCHRONISATION
SYNCHRONISATION DE DISQUES

(30) Priorität: 28.02.1995 DE 19506987
(43) Veröffentlichungstag der Anmeldung: 17.12.1997
(73) Patentinhaber: ZF FRIEDRICHSHAFEN Aktiengesellschaft, 88038 Friedrichshafen (DE)
(72) Erfinder: BAILLY, Gerhard, D-88046 Friedrichshafen (DE); BAASCH, Detlef, D-88048 Friedrichshafen (DE); BIEBER, Gerold, D-88085 Langenargen (DE); GAZYAKAN, Ünal, D-88045 Friedrichshafen (DE)
(86) Internationale Anmeldenummer: EP9600728
(87) Internationale Veröffentlichungsnummer: WO9627090

(56) Entgegenhaltungen:
- DE-A- 3 035 045
- US-A- 1 777 012
- US-A- 2 467 987
- US-A- 2 627 955
- US-A- 3 063 529
- US-A- 4 131 185

## Beschreibung

Die Erfindung betrifft eine Synchronisierung nach dem Oberbegriff des Anspruchs 1.

Für die Übertragung der Antriebsleistung und die Anpassung des Motordrehmomentes an den Zugkraftbedarf eines Fahrzeugs werden heute praktisch ausschließlich mehrstufige Zahnradgetriebe eingesetzt.

Die Getriebeschaltung kann mit Hilfe einer Synchronisiereinrichtung erheblich vereinfacht werden. Beim Synchronisieren wird die Drehzahlanpassung der miteinander zu verbindenden Getriebeelemente selbsttätig oder gesteuert durchgeführt, um so das Doppelkuppeln beim Hochschalten bzw. das Doppelkuppeln mit Zwischengasgeben beim Rückschalten zu vermeiden. Die Fahrsicherheit wird deutlich erhöht, da der Gangwechsel auch in kritischen Fahrsituationen schnell, sicher und auch geräuschlos möglich ist, beispielsweise kann der rechte Fuß des Fahrers beim Bergabfahren während einer Rückschaltung auf der Bremse bleiben.

Eine Synchronisierung hat folgende Aufgaben zu erfüllen:
- Drehzahlanpassung von zwei unterschiedlich schnell rotierenden Getriebeelementen und der damit verbundenen Teile so, daß sie ohne Ratschgeräusch formschlüssig miteinander verbunden werden können;
- Sperren der formschlüssigen Verbindung bis zum Gleichlauf der zu verbindenden Getriebeelemente, um Ratschen und Beschädigungen der formschlüssigen Schaltelemente zu verhindern;
- Lösen der Sperre im Augenblick des Gleichlaufs;
- Drehzahlanpassung innerhalb kürzester Zeit und mit möglichst geringen Schaltkräften;
- Betriebssicherheit auch unter ungünstigen Umständen, wie beispielsweise bei kaltem, zähem Getriebeöl oder bei extrem schnellem Durchreißen der Gänge.

In den heutigen synchronisierten Fahrzeuggetrieben werden überwiegend Synchronisiereinrichtungen für jeden einzelnen Gang eingesetzt.

Weite Verbreitung hat dabei die Sperrsynchronisierung mit Konus gefunden. Bei diesem System werden konische Reibkegel für die kraftschlüssige Drehzahlanpassung der zu verbindenden Getriebeelemente eingesetzt. Diese Art der Synchronisierung findet sowohl in Personenwagen- als auch in Nutzfahrzeuggetrieben Verwendung.

Zahnrad und zugehöriger Kupplungskörper sind fest miteinander verbunden. Der Kupplungskörper hat einen konischen Reibkegel und trägt außen die Schaltverzahnung. Die Schiebemuffe ist verdrehfest, aber axial verschiebbar auf dem Synchronkörper, der fest auf der Getriebehauptwelle sitzt, angeordnet. In Aussparungen des Synchronkörpers befinden sich je eine Druckfeder, ein Kugelbolzen und ein Druckstück. Die Federn drücken die Kugelbolzen in Mittelstellung der Schiebemuffe durch eine Bohrung im Druckstück in eine V-förmige Aussparung der Schiebemuffe. Zwischen Kupplungsund Synchronkörper ist der Synchronring angeordnet, der gegenüber dem Synchronkörper eine durch Anschläge begrenzte Drehbewegung ausführen kann. Der Synchronring hat ebenfalls einen Reibkonus und trägt am Außendurchmesser die sogenannte Sperrverzahnung.

Im Leerlauf befindet sich die Schiebemuffe in axialer Mittelstellung. Die Zahnräder können sich frei auf der Getriebehauptwelle drehen. Durch axiales Bewegen der Schiebemuffe wird der Synchronring mittels Kugelbolzen und Druckstücken gegen den konischen Reibkegel des Kupplungskörpers gedrückt. Durch den Drehzahlunterschied der zu kuppelnden Teile wird der Synchronring relativ zur Schiebemuffe bis zum Anschlag verdreht. Die Sperrverzahnung verhindert in dieser Stellung die weitere axiale Bewegung der Schiebemuffe.

Die auf die Schiebemuffe wirkende axiale Schaltkraft wird über die angeschrägte Verzahnung auf die Reibkegel von Synchronring und Kupplungskörper übertragen, am Reibkegel verstärkt, in ein Drehmoment umgewandelt und bewirkt so eine Verminderung der Drehzahldifferenz, und zwar um so schneller, je höher Schaltkraft und damit Synchronisierdrehmoment sind. Die Anschrägung der Sperrverzahnung ist so ausgelegt, daß das mittels Schaltkraft der Schiebemuffe am Synchronring erzeugte Drehmoment kleiner ist als das ihm entgegengesetzt wirkende Reibmoment am Konus. Nach Erreichen des Gleichlaufs wird der Synchronring durch den anhaltenden Schaltdruck der Schiebemuffe so weit zurückgedreht, bis die Zähne der Schiebemuffe vor den Zahnlücken des Synchronringes stehen und ein Durchtritt durch die Sperrverzahnung zum geräuschlosen Einschalten des Ganges möglich ist.

Eine solche Sperrsynchronisierung ist beispielsweise bekanntgeworden aus "ZF-B-Sperrsynchronisierung"/Druckschrift 42290/R 2964-367 vom März 1967.

Die dort beschriebene Sperrsynchronisierung ist so ausgeführt, daß der mit einer Außenverzahnung versehene Synchronring beim Anpressen an den Reibkegel des Kupplungskörpers eine durch Anschläge am Synchronkörper begrenzte Drehbewegung ausführt. Diese Verdrehung hat zur Folge, daß sich die angeschrägten Zahnstirnflächen des Synchronringes gegen die der Schiebemuffe pressen und somit ein Weiterbewegen der Muffe verhindern. Erst wenn die Kegelreibflächen den Gleichlauf der zu kuppelnden Teile herbeigeführt haben, bewirkt der anhaltende Druck der Schiebemuffe ein Zurückdrehen des Synchronringes. Die Sperre ist damit gelöst und die Schiebemuffe wird in die Verzahnung des Kupplungskörpers eingeschoben.

Im Leerlauf befindet sich die Schiebemuffe in axialer Mittelstellung. Die Rastenbolzen werden durch Federn in Rasten der Schiebemuffe gedrückt. Die Losräder können sich frei auf ihrer Welle drehen. Der Drehzahlunterschied zwischen Synchronring und Kupplungskörper und das Schleppmoment zwischen ihren Reibflächen bewirken, daß der Synchronring am Verdrehanschlag des Synchronkörpers anliegt. Die angeschrägten Zahnstirnflächen von Schiebemuffe und Synchronring stehen einander gegenüber.

In der Sperrstellung hat die Schiebemuffe zunächst über die Rastenbolzen und Druckstücke den Synchronring gegen die Kupplungskörper geschoben. Die Zahnstirnflächen haben damit die Weiterleitung der Schaltkraft von der Schiebemuffe direkt an den Synchronring übernommen. Solange ein Drehzahlunterschied zwischen Synchronring und Kupplungskörper besteht, ist das Reibmoment an den Kegelreibflächen von Synchronring und Kupplungskörper größer als das Rückstellmoment durch die angeschrägten Zahnstirnflächen. Die Schiebemuffe ist deshalb gegen Durchschalten in den Kupplungskörper gesperrt.

Erst wenn der Drehzahlunterschied zwischen Synchronring und Kupplungskörper ausgeglichen und somit das Reibmoment aufgehoben ist, dreht die Schiebemuffe den Synchronring in die Stellung "Zahn auf Zahnlücke" zurück. Über die Sperrverzahnung des Synchronringes hinweg wird dann die Schiebemuffe in die ebenfalls stirnseitig angeschrägte Verzahnung des Kupplungskörpers eingeschoben.

An dieser bekannten Synchronisiereinrichtung besteht hinsichtlich Funktion und Herstellkosten erheblicher Verbesserungsbedarf. Verbessert werden muß insbesondere auch der hohe Schaltkraftbedarf bei niedrigen Gangstufen und das unbefriedigende Schaltgefühl, das sich in einer gewissen Hakeligkeit beim Schaltvorgang, einer unbefriedigenden Entsperrhemmung und in Kraftspitzen beim Einspuren bemerkbar macht. Es bestehen Kraftspitzen nach dem Synchronisieren, allgemein als "2. Punkt" bezeichnet, die verursacht werden durch den Aufbau einer Differenzdrehzahl in der Freiflugphase bzw. einem Stoßvorgang beim Auftreffen der Verzahnungen, verbunden mit einem großen Trägheitsmoment. Sie wirken sich als Beschleunigungen am Schalthebel aus. Ebenfalls weist die Synchronisierung bekannter Bauart einen großen Bedarf an Bauraum auf. Bestehenden Ansprüchen nach Verkleinerungen, nach geringerem Gewicht und nach einer höheren Komplexität wird dies nicht mehr gerecht.

Die gebräuchlichen Synchronisiereinrichtungen stellen die drei Grundfunktionen der Synchronisierung
- beliebig oft schließbares und lösbares Verbinden zweier um eine gemeinsame Achse rotierender Bauteile,
- Energieübertragung auf bzw. Energieabführung von einem rotierenden Bauteil (Beschleunigen, Abbremsen),
- Drehzahldifferenz zwischen zwei um eine gemeinsame Achse drehenden Bauteile auf einen Wert gleich oder nahe Null einregeln
zur Verfügung.

Betrachtet man einen Schaltvorgang der bekannten Synchronisiereinrichtung hinsichtlich des negativen Einflusses auf das Schaltgefühl, fallen insbesondere die Phasen nach dem Erreichen des Synchronlaufes auf.

Das Aufheben der Sperrstellung ist nur unter Krafteinsatz am Schalthebel durch Verdrehen der freien Drehmassen um eine halbe Zahnteilung der Kupplungsverzahnung möglich. Der Synchronring ist durch die Wahl von Konuswinkel und Sperrverzahnungsgeometrie als sperrsicher ausgelegt. Dem an der Sperrverzahnung anliegenden Entsperrmoment wirkt über den Reibkonus ein gleich großes Reaktionsmoment der trägen Drehmassen entgegen und verhindert somit ein separates Verdrehen des Ringes relativ zu den freien Drehmassen. Erst in der "Freiflugphase", zwischen Entsperren und Aufeinandertreffen der Kupplungsverzahnung, sollte sich der Synchronring vom Reibkonus gelöst haben. Ein Anhaften würde beim Einspuren der Kupplungsverzahnung ein Losbrechen des Ringes und damit zusätzlichen Kraftbedarf verursachen.

Nachteile ergeben sich bei hohen Schleppmomenten an den freien Drehmassen des Getriebes durch die fehlende Momentübertragung in der "Freiflugphase". Während der kurzen Zeitspanne ohne Momentübertragung zwischen den zu koppelnden Drehmassen baut sich erneut eine Drehzahldifferenz auf. Entsprechend harte Stoß- und damit Abweiskräfte machen sich beim Aufeinandertreffen der Kupplungsverzahnung am Schalthebel unangenehm bemerkbar. Verschärft wird diese Problemstellung bei heute verwendeten Synchronisierungen durch den konstruktionsbedingten Zwang, den Anspitzungswinkel an Sperr- als auch an Einspurverzahnung auf zumindestens ähnlichen Werten zu halten.

Bei Synchronisierungen mit Reiblamellen sind die kegelförmigen Reibglieder durch eine Anzahl von Lamellenscheiben ersetzt, die während der Drehzahlangleichung aneinander reiben. Dabei sind jeweils in einer Reihenfolge axial aneinander anliegende Scheiben entweder einerseits mit dem Synchronring oder der Getriebewelle verbunden oder andererseits mit dem Kupplungskörper am Zahnrad oder dem Zahnrad selbst. Eine solche Synchronisierung, die beispielsweise auch mit einer Verstärkungseinrichtung der Synchronkraft ausgestattet sein kann, ist aus der DE 32 08 945 Al bekannt.

Ebenfalls ist aus der US 1.777.012 eine Synchronisierung mit Reiblamellen bekannt. Ein axial verschiebbares Element zur Verbindung einer Getriebewelle mit einem Zahnrad besteht aus einem äußeren Lamellenträger mit einer Verzahnung und einem inneren Lamellenträger mit einer Kupplungsverzahnung. Zwischen beiden ringförmigen Lamellenträgern sind Reiblamellen angeordnet, die jeweils axial aufeinanderfolgend mit den beiden Lamellenträgern verbunden sind. Jeder Lamellenträger trägt dabei einen Satz Reiblamellen. Die Reiblamellen liegen aneinander an, ohne daß sie von einer vorgegebenen Kraft aufeinandergedrückt werden. Erst durch die vom Fahrer eingeleitete Schaltkraft, die zunächst nur den ersten Lamellenträger mit seinem Satz an Reiblamellen axial bewegt, werden die beiden Sätze von Reiblamellen gegeneinander gedrückt. Der innere Lamellenträger weist an seinen axial entgegengesetzten Enden Kupplungsklauen auf, die im eingeschalteten Zustand in Verzahnungen des zu schaltenden Zahnrades eingreifen. Der innere Lamellenträger weist ebenso eine Innenverzahnung auf, mit der er zwischen Verzahnungen auf der Welle axial bewegt werden kann.
Der äußere Lamellenträger weist eine Fangverzahnung auf, die jedoch axial weiter hervorstehen als die Kupplungsverzahnung am inneren Lamellenträger, so daß der äußere Lamellenträger das zu schaltende Zahnrad eher erreicht.
Die Sätze der Reiblamellen sind zwischen den beiden Lamellenträgern so angeordnet, daß auf einer Seite die äußere Lamelle an Anschlägen anliegt und die äußere Lamelle auf der anderen Seite durch Stoppringe festgelegt wird. Im ausgeschalteten Zustand liegt der innere Lamellenträger mit einer Ringfeder in einem Bereich ohne Verzahnung auf der Getriebewelle. Werden die Lamellenträger durch eine Schaltgabel axial aus der Neutrallage herausbewegt, so überträgt sich diese Bewegung vom äußeren Lamellenträger, in den die Schaltgabel eingreift, über die Lamellensätze auf den inneren Lamellenträger. Zunächst kann sich der innere Lamellenträger axial unbehindert mitbewegen, aber dann läuft die Ringfeder auf Abschrägungen an Verzahnungen auf der Getriebewelle auf und erzeugt dort eine Reibung, die die axiale Bewegung behindert. Dadurch wird die Reibung zwischen den Lamellensätzen verstärkt und die Drehzahlangleichung erzielt.

Hierbei ist nachteilig, daß zur Aufbringung des Synchronmomentes die anliegende Schaltkraft erforderlich ist. Ohne die anliegende Schaltkraft und die durch die axiale Verschiebung erzeugte Reibung zwischen Ringfeder und Klauen wird kein Synchronmoment zwischen den Reiblamellen erzeugt. Angefedert werden hierbei weder Fangverzahnung noch die Kupplungsverzahnung.

Ausgehend von diesem Stand der Technik ist es Aufgabe der vorliegenden Erfindung, eine Synchronisiereinrichtung zu schaffen, die unter Vermeidung von Schaltstößen und Schaltgeräuschen ein hohes Synchronmoment bei geringer erforderlicher Schaltkraft erzeugt.

Diese Aufgabe wird gelöst durch eine Synchronisiereinrichtung mit den Merkmalen des Anspruchs 1. Ausgestaltungen sind Gegenstand von Unteransprüchen.

Die erfindungsgemäße Synchronisierung weist eine Kupplungsverzahnung auf, die gegenüber dem zu schaltenden Zahnrad angefedert ist. Dazu sind beispielsweise zwischen dem Synchronkörper und dem Zahnrad Kupplungskörper vorgesehen, beispielsweise in Form von Kupplungsscheiben, die mit einer Innenverzahnung in eine entsprechende Außenverzahnung auf dem Zahnrad oder auf der Getriebewelle eingreifen können. Die Kupplungskörper sind begrenzt axial verschiebbar, wobei einerseits der Synchronkörper und andererseits eine zwischen Kupplungskörper und Zahnrad angeordnete Federeinrichtung, beispielsweise eine Wellfeder, axiale Begrenzungen bilden. Der Kupplungskörper ist dabei axial maximal so weit in Richtung auf das Zahnrad verschiebbar, bis die Wellfeder flach zwischen Kupplungskörper und Zahnrad liegt. Die Kupplungskörper weisen eine möglichst geringe Masse auf. Die Synchronisierung beinhaltet ein Lamellenpaket, das für beide zu schaltenden Zahnräder zusammen vorgesehen ist. Das Lamellenpaket ist so zwischen zwei Bauteilen einer Schiebemuffe vorgesehen, daß es axial durch eine Federeinrichtung, beispielsweise eine Tellerfeder, unter eine Vorspannung versetzt wird. Auch andere Federeinrichtungen, wie beispielsweise Federringe, Zahnscheiben, Fächerscheiben, Spannscheiben oder auch Scheiben oder Ringe aus Gummi oder gummiartigen Werkstoffen, können durch gezielte Auslegung eine sehr fein dosierte Vorspannung gewährleisten. Die Vorspannung kann auch durch eine Federeinrichtung erzielt werden, die sich aus der Gestaltung der Reiblamellen ergibt. So können Reiblamellen verwendet werden, die in Form von Wellfedern im unverspannten Zustand ausgebildet sind und beim Einbau derart zusammengepreßt werden, daß das verpreßte Lamellenpaket flache oder nahezu flache Lamellen aufweist, wobei die Vorspannung aus dem Zurückstreben in die Ausgangsform resultiert. Durch Form- und Materialauswahl kann fein dosiert Einfluß auf die Vorspannung genommen werden. Diese Vorspannung bewirkt, daß das Lamellenpaket im ungeschalteten Zustand der Synchronisierung ohne Reibung der einzelnen Lamellen aneinander zusammen mit dem Synchronkörper und der Getriebewelle, auf der die Synchronisierung angeordnet ist, umläuft.

Die Schiebemuffe weist eine radial äußere Fangverzahnung auf, die mit Fangverzahnungen an den jeweiligen zu schaltenden Zahnrädern korrespondiert. Die Fangverzahnung an den Zahnrädern kann an separaten Bauteilen vorgesehen sein, die gegenüber dem Zahnrad angefedert sein können und mit den Zahnrädern beispielsweise über eine Verzahnung verbunden sind. Durch die Anordnung der Fangverzahnung in separaten Bauteilen an den Zahnrädern kann die Masse der Fangverzahnungen gering gehalten werden.

Die Schiebemuffe weist weiterhin eine radial innenliegende Kupplungsverzahnung auf. An dieser Stelle weist die Kupplungsverzahnung in axialer Richtung eine geringere Breite auf als im Bereich der Fangverzahnung, so daß die Fangverzahnung an der Schiebemuffe mit der Fangverzahnung an den Zahnrädern früher in Verbindung treten kann als die Kupplungsverzahnungen von Schiebemuffe und Kupplungskörper.

Die Anfederung von Fangverzahnung und Kupplungsverzahnung kann durch Federeinrichtungen, wie Wellfedern, Tellerfedern, Federringe, Zahnscheiben, Fächerscheiben, Spannscheiben und Scheiben oder Ringe aus Gummi oder gummiartigen Werkstoffen, vorgesehen sein.

Die Erfindung wird anhand von Figuren näher beschrieben.

Es zeigen:
- Fig. 1: die Darstellung der Synchronisierung im Schnitt und
- Fig. 2: einen Ausschnitt der Fangverzahnung.

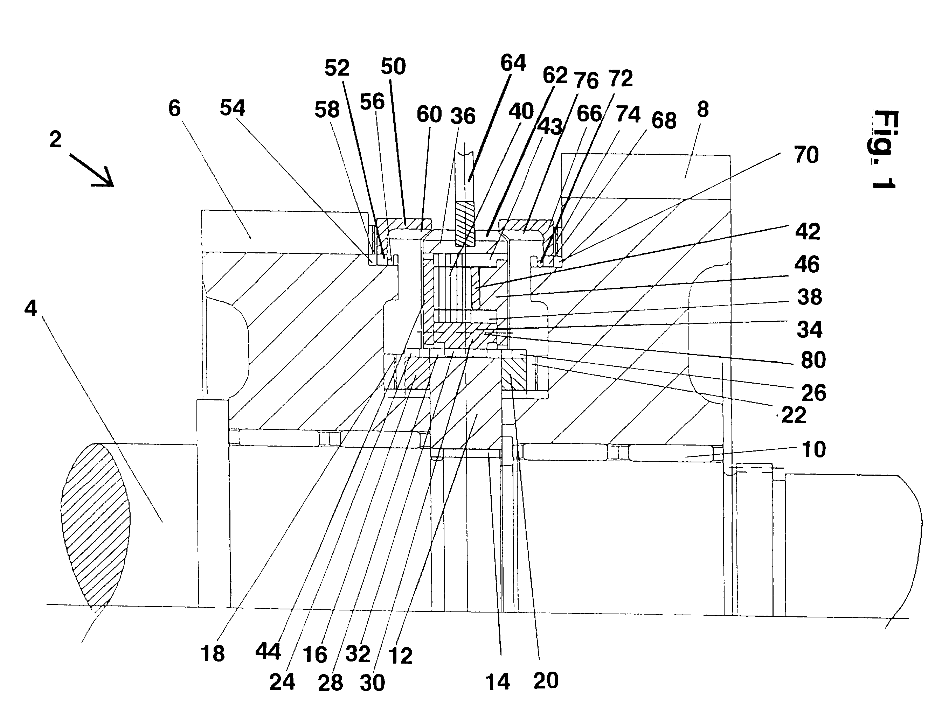

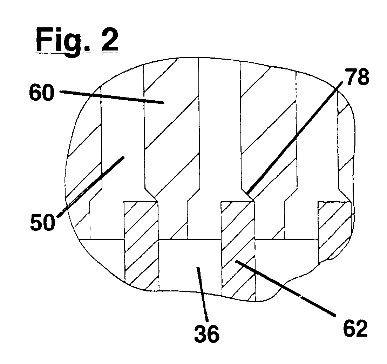

Die Fig. 1 zeigt die Darstellung der erfindungsgemäßen Synchronisierung 2. Auf einer Getriebewelle 4 sind zwei Zahnräder 6 und 8 axial fest, aber frei verdrehbar angeordnet. Dazu sind die Zahnräder 6 und 8 auf Lagern, beispielsweise Nadellagern 10, gelagert, so daß sie möglichst reibungsfrei um die Getriebewelle 4 rotieren können. Zwischen den Zahnrädern 6 und 8 ist auf der Getriebewelle 4 ein Synchronkörper 12 angeordnet, der mit der Getriebewelle 4 vorzugsweise über eine Verzahnung 14 drehfest verbunden ist. Zwischen dem Synchronkörper 12 und dem Zahnrad 6 ist ein Kupplungskörper 16 und eine Federeinrichtung 18 vorgesehen. Die Federeinrichtung 18 ist beispielsweise als Wellfeder ausgeführt und federt den Kupplungskörper 16 in Richtung auf den Synchronkörper 12 an. Zwischen dem Synchronkörper 12 und dem Zahnrad 8 ist ein Kupplungskörper 20 und eine Federeinrichtung 22 vorgesehen. Die Federeinrichtung 22 ist beispielsweise ebenfalls als Wellfeder ausgeführt und federt den Kupplungskörper 20 in Richtung auf den Synchronkörper 12 an.
Der Kupplungskörper 16 weist als eine Außenverzahnung eine Kupplungsverzahnung 24 auf. Ebenso weist der Kupplungskörper 20 als eine Außenverzahnung eine Kupplungsverzahnung 26 auf. Der Synchronkörper 12 weist eine Außenverzahnung 28 auf, in die die Schiebemuffe 30 mit einer Innenverzahnung eingreift. Die Schiebemuffe 30 ist mit ihrer Innenverzahnung in der Außenverzahnung 28 axial bewegbar. Die Innenverzahnung der Schiebemuffe 30 wirkt als eine Kupplungsverzahnung 32 mit den Kupplungsverzahnungen 24 und 26 an den Kupplungskörpern 16 und 20 zusammen. Die Kupplungsverzahnungen 24, 26, 32 können stumpf, d. h. ohne Anspitzungen, ausgeführt sein. Die Enden der Kupplungsverzahnungen 24, 26, 32 können dabei an den Ecken mit Abweisschrägen versehen werden, die es ermöglichen, ein Schalten bei unzulässig hohen Drehzahlen zu verhindern.
Des weiteren erweist sich eine Hinterrollung der Zähne der Kupplungsverzahnungen 24, 26, 32 als vorteilhaft, da hierdurch eine selbsthemmende Verbindung zwischen den Kupplungsverzahnungen 32 von Schiebemuffe 30 und Kupplungskörper 16, 20 erzielt wird, die ein unerwünschtes Herausspringen der Gänge verhindert.
Die Schiebemuffe 30 weist weiterhin an ihrem äußeren Umfang eine Außenverzahnung auf, die in Form einer Fangverzahnung 62 ausgestaltet ist, wie sie in Fig. 2 näher erläutert wird. In dem äußeren Umfang kann eine Nut vorgesehen sein, in die eine Schaltgabel 64 einer Schalteinrichtung vorteilhafterweise eingreifen kann.

Die Schiebemuffe 30 weist einen inneren Lamellenträger 34 und einen äußeren Lamellenträger 36 auf. Der Lamellenträger 34 greift beispielsweise mit einer Außenverzahnung 38 in entsprechende Verzahnungen an einzelnen Lamellen eines Lamellenpaketes 40 ein. Der Lamellenträger 36 greift seinerseits beispielsweise mit einer Innenverzahnung 43 ebenfalls in entsprechende Verzahnungen an anderen Lamellen des Lamellenpaketes 40 ein. Dabei folgt in axialer Reihenfolge jeweils eine Lamelle, die mit dem Lamellenträger 34 in Verbindung steht, auf eine Lamelle, die mit dem Lamellenträger 36 in Verbindung steht, wodurch bei einem Verdrehen der Lamellenträger 34 und 36 gegeneinander die Lamellen des Lamellenpaketes 40 jeweils aneinander reiben. Die Reibungsoberfläche der Lamellen besteht vorzugsweise aus Papier, jedoch sind auch andere Werkstoffe mit günstigen Reibeigenschaften, wie Molybdän-Reibbeläge oder Sinter-Reibbeläge, verwendbar. Um eine geringe axiale Ausdehnung der Schiebemuffe zu erzielen, sollte die Anzahl der Lamellen begrenzt werden, beispielsweise auf je drei Lamellen für jeden der Lamellenträger 34 und 36. Durch eine Federeinrichtung, beispielsweise eine Tellerfeder 42, wird das Lamellenpaket 40 in axialer Richtung unter eine definierte Vorspannung gesetzt, wobei das Lamellenpaket 40 durch die Tellerfeder 42 gegen ein erstes mit dem inneren Lamellenträger 34 verbundenes Bauteil 44 gedrückt wird. Die Tellerfeder 42 liegt andererseits an einem zweiten Bauteil 46 an und stützt sich gegenüber diesem axial ab. Das zweite Bauteil 46 ist ebenfalls mit dem inneren Lamellenträger 34 verbunden, beispielsweise in Form einer hier schematisch dargestellten Vernietung 80. Schraubverbindungen oder Anordnungen mit Stiften und Sicherungsringen sind ebenfalls verwendbar. Die Bauteile 44 und 46, die beispielsweise in Form von Blechen ausgeführt sein können, sind gegenüber dem äußeren Lamellenträger 36 frei verdrehbar.
Am Zahnrad 6 ist eine Fangeinrichtung 50 vorgesehen, die über eine Innenverzahnung 52 mit einer Außenverzahnung 54 am Zahnrad 6 mit dem Zahnrad 6 drehfest verbunden ist. In der Außenverzahnung 54 ist die Fangeinrichtung 50 mit ihrer Innenverzahnung 52 begrenzt axial verschiebbar. Dabei wird die Fangeinrichtung 50 axial einerseits durch einen Anschlag am Zahnrad 6 und andererseits durch eine Sicherungseinrichtung, beispielsweise einen Sicherungsring 56, begrenzt. Zwischen Fangeinrichtung 50 und Anschlag am Zahnrad 6 kann eine Federeinrichtung, beispielsweise eine Wellfeder 58, vorgesehen sein, durch die die Fangeinrichtung 50 gegenüber Schiebemuffe 30 axial angefedert wird. Die Fangeinrichtung 50 weist eine axial in Richtung auf die Schiebemuffe 30 gerichtete Fangverzahnung 60 auf, die in Fig. 2 näher erläutert wird. Die Fangverzahnung 60 ist dazu geeignet, in die Fangverzahnung 62 an der Schiebemuffe 30 einzugreifen.

Am Zahnrad 8 ist eine Fangeinrichtung 66 vorgesehen, die über eine Innenverzahnung 68 mit einer Außenverzahnung 70 am Zahnrad 8 mit dem Zahnrad 8 drehfest verbunden ist. In der Außenverzahnung 70 ist die Fangeinrichtung 66 mit ihrer Innenverzahnung 68 begrenzt axial verschiebbar. Dabei wird die Fangeinrichtung 66 axial einerseits durch einen Anschlag am Zahnrad 8 und andererseits durch eine Sicherungseinrichtung, beispielsweise einen Sicherungsring 72, begrenzt. Zwischen Fangeinrichtung 66 und Anschlag am Zahnrad 8 kann eine Federeinrichtung, beispielsweise eine Wellfeder 74, vorgesehen sein, durch die die Fangeinrichtung 66 gegenüber der Schiebemuffe 30 axial angefedert wird. Die Fangeinrichtung 66 weist eine axial in Richtung auf die Schiebemuffe 30 gerichtete Fangverzahnung 76 auf, die in Fig. 2 näher erläutert wird. Die Fangverzahnung 76 ist dazu geeignet, in die Fangverzahnung 62 an der Schiebemuffe 30 einzugreifen.

Die Lamellenträger 34 und 36 mit dem Lamellenpaket 40 sowie die Bauteile 44 und 46 und die Tellerfeder 42 bilden ein gemeinsam axial verschiebbares, einheitliches Schaltpaket. Zur Verschiebung dieses Schaltpaketes greift ein Betätigungselement, beispielsweise die Schaltgabel 64, in eine außen umlaufende Ausnehmung in dem äußeren Lamellenträger 36 der Schiebemuffe 30 ein.

Soll nun eines der lose rotierenden Zahnräder 6 oder 8 mit der eine andere Drehzahl aufweisenden Getriebewelle 4 verbunden werden, wird das einheitliche Schaltpaket in Richtung auf das anzukoppelnde Zahnrad verschoben. Durch die Verschiebung kommt der äußere Lamellenträger 36 mit der Fangeinrichtung 50 in Kontakt. Die durch die Wellfeder 58 angefederte Fangeinrichtung 50 kann dem Lamellenträger 36 axial ausweichen. In den Bereichen, in denen sich Lamellenträger 36 und Fangeinrichtung 50 berühren, weisen beide Bauteile Fangverzahnungen 60, 62 auf. Durch die geringe Masse der Fangeinrichtung 50 und unter der axial wirkenden Federkraft der Wellfeder 58 wird die Fangeinrichtung 50 mit der Fangverzahnung 60 im geeigneten Augenblick, d. h. bei Passieren einer Verzahnungslücke, in die Fangverzahnung 62 am Lamellenträger 36 einspuren. Durch das Einspuren kann die Fangeinrichtung 50 ein Drehmoment vom äußeren Lamellenträger 36 auf das Zahnrad 6 bzw. umgekehrt übertragen. Überschreitet dieses Drehmoment einen durch die Lamellenanzahl und Tellerfederauslegung bzw. Tellerfederverspannung einstellbaren Grenzwert, beginnt das Lamellenpaket zu rutschen. Die Verwendung von Papierlamellen ist hier sinnvoll, da der Unterschied zwischen Haftreibung und Gleitreibung gering gehalten werden kann.

Ursache für das die Reiblamellen gegeneinander verdrehende Moment ist die vorliegende Differenzdrehzahl zwischen dem Zahnrad 6, den mit ihm verbundenen trägen Drehmassen und der Getriebewelle 4. Ein dynamischer Stoßvorgang durch die schlagartige Beschleunigung von trägen Drehmassen wird durch die Lamellenkupplung vermieden und beschränkt sich lediglich auf die abrupte Beschleunigung des äußeren Lamellenträgers 36 und der damit verbundenen Reiblamellen. Durch die erfindungsgemäße Konstruktion können diese trägen Massen sehr klein gehalten werden. Die in den frei drehenden trägen Massen enthaltene Rotationsenergie beim Abbremsen bzw. die fehlende Energie beim Beschleunigen wird über die rutschende Lamellenkupplung übertragen. Die rutschende Lamellenkupplung übernimmt in dieser Synchronisierungsphase die Funktion der Drehzahlangleichung.
In dieser Synchronisierungsphase wird das gesamte Schaltpaket weiter in Richtung auf das Zahnrad 6 verschoben. Geführt wird das Schaltpaket dabei in den Verzahnungen 28, 32 zwischen innerem Lamellenträger 30 und Synchronkörper 12. Nach einem definierten Verschiebeweg kommt die Kupplungsverzahnung 32 des inneren Lamellenträgers 30 mit der äußeren Kupplungsverzahnung 24 am Kupplungskörper 16 in Kontakt. Der Kupplungskörper 16 kann aufgrund seiner Anfederung durch die Wellfeder 18 dem inneren Lamellenträger 30 axial ausweichen.

Bei mit stumpfen Enden ausgeführten Kupplungsverzahnungen 24, 32 stehen die stumpfen Stirnflächen mit hoher Wahrscheinlichkeit unter Vorspannung der Feder aufeinander. Ist es zufällig bereits zu einem Einspuren gekommen, so ist der Schaltvorgang insgesamt abgeschlossen. Andernfalls wird im Zustand des verspannten Aufeinanderstehens der Verzahnungen die Fahrzeugkupplung geschlossen und das sich aufbauende Drehmoment verdreht die Verzahnungen gegeneinander. Es kommt zum Einspuren der Verzahnungen und die Schaltung ist abgeschlossen. Auch durch Schleppmomente am Radsatz des Getriebes ist ein vorzeitiges Verdrehen der Verzahnungen gegeneinander und ein anschließendes Einspuren möglich.

Wird die Schaltung beispielsweise nicht von einem Fahrer per Schaltgestänge von Hand ausgeführt, so ist auch die Alternative einer automatischen Schaltung durch Schaltmittel möglich, die vom Fahrer fernbetätigt werden. Dabei kann die Fernbetätigung auch unter Zwischenschaltung einer logischen Steuerung geschehen, die Einfluß auf die schaltbaren Gangstufen nimmt. Unbeeinflußt durch den Fahrer kann eine Automatik auch die gesamte Schaltung des Schaltgetriebes übernehmen, wobei vorzugsweise immer in den optimalen Bereichen geschaltet wird.

Als Schaltmittel kommen überwiegend pneumatisch oder elektrisch betätigte Schaltmittel zum Einsatz. Ebenfalls sind hydraulisch betätigte Schaltmittel anwendbar.

Durch den Wegfall der Einspurschrägen an den Kupplungsverzahnungen läßt sich ein kurzer Schaltweg erreichen. Dieser Weggewinn kann zu einer Vergrößerung der Übersetzung zwischen Schalthebel und Schiebemuffe genutzt werden. Dadurch lassen sich die Schalt- und Wählwege am Schalthebel bei geringen Schaltkräften deutlich verringern.

Das gefederte Aufeinandertreffen der Kupplungsverzahnungen von Schiebemuffe und Kupplungskörper vermittelt dem Fahrer ein verbessertes Schaltgefühl und ermöglicht hohe Schaltdrehzahlen.

Bei automatisierten Synchronisierungen mit einer Motorführung, bei der ein Synchronisieren der zu schaltenden Getriebeteile durch einen Eingriff in die Motorsteuerung erzielt wird, läßt sich die vorgeschlagene Synchronisierung besonders vorteilhaft einsetzen. Dabei ist immer eine definierte Differenzdrehzahl vorhanden. Insbesondere hierbei kann mit hohem Kostenvorteil eine sichere Synchronisierung der zu schaltenden Gangstufen erreicht werden.
Die momentenübertragenden Verzahnungen weisen ein möglichst geringes Flankenspiel auf.

Ein ausreichend langes Synchronisieren im Lamellenpaket 40 ist notwendig, bevor die für die Drehmomentenübertragung vorgesehenen Kupplungsverzahnungen 24, 26, 32 die freien Drehmassen aus dem Reibschluß der Lamellenkupplung in den Formschluß der Kupplungsverzahnungen überführen, um einen Momentenstoß unzulässiger Höhe zu vermeiden. Dies läßt sich auf verschiedenen Wegen erreichen:
1. Die Zeitspanne zwischen dem Einspuren der Fangverzahnung 62 am äußeren Lamellenträger 36 in die Fangverzahnung 60 bzw. 76 an der Fangeinrichtung 50 bzw. 66 und dem Auftreffen der Kupplungsverzahnung 32 am inneren Lamellenträger 34 auf die Kupplungsverzahnung 24 bzw. 26 am Kupplungskörper 16 bzw. 20 ist so lang bemessen, daß ein Synchronlauf oder eine geringe zulässige Restdrehzahldifferenz erreicht wird.
2. In Fig. 2 ist gezeigt, daß die Fangverzahnung 60 an der Fangeinrichtung 50 Sperreinrichtungen in Form von Sperrflanken 78 aufweist, an denen sich die Enden der Fangverzahnung 62 des äußeren Lamellenträgers 36 anlegen können. Ein Durchschalten der Fangverzahnungen 62, 60 ineinander bei begrenzter Schaltkraft ist nicht möglich, bis der Synchronlauf erreicht ist und das Rutschmoment zwischen den Lamellen im Lamellenpaket 40 entfallen ist. Nach einem Entsperrvorgang, d. h. nach dem Rückdrehen der freien Getriebedrehmassen, kann das ganze Schaltpaket weitergeschoben werden und die Kupplungsverzahnungen treffen aufeinander.
3. Das Schaltpaket kommt unter beliebiger Drehzahldifferenz mit der Kupplungsverzahnung 24 bzw. 26 am Kupplungskörper 16 bzw 20 in Kontakt. Die Verzahnungspaarung von Kupplungsverzahnung 24 bzw. 26 und Kupplungsverzahnung 32 am inneren Lamellenträger 34 ist so ausgelegt, daß ein Abweisen des Kupplungskörpers 16 bzw. 20 stattfindet, bis eine maximal zulässige Drehzahldifferenz zur Begrenzung eines Einspurstoßes unterschritten wird.

Die Lösungen 1 und 3 sind insbesondere für automatisierte Getriebe sinnvoll, da eine Kontrolle über die Schaltgeschwindigkeit bzw. den Zeitpunkt des Schließens der Hauptkupplung notwendig ist. Durch eine elektronische Steuerung des Antriebsstrangs ist dies erreichbar. In diesen Lösungen wird auf ein Sperren des Durchschaltvorganges verzichtet. Bei allen gezeigten Lösungen tritt die sogenannte Freiflugphase zwischen Aufhebung der Sperrfunktion und drehfester Verbindung der Kupplungsverzahnungen nicht auf. Dadurch wird es möglich, mehrere Synchronisierungen in einem Getriebe gleichzeitig zu betätigen.

Die Lösung 2 ist bei einer Ausführung als Synchronisierung mit Handschaltung vorzuziehen, da dem Schaltenden eine Rückmeldung über den Abschluß des Synchronvorganges oder die Wahl eines falschen Ganges geliefert wird.
Bei der Anwendung als Handschalteinrichtung bewirkt die axiale Anfederung der Fangeinrichtung 50, 66 zusätzlich die Vermeidung einer unangenehmen Stoßwirkung in die Schaltmechanik. Die schaltbare Differenzdrehzahl kann durch die Gestaltung der Fangverzahnung 60, 76 beeinflußt werden. Wenige Zähne mit einem großen Flankenspiel erlauben es, bei hohen Differenzdrehzahlen einzuspuren. In einzelnen Anwendungsfällen ist es auch möglich, auf eine Anfederung der Fangeinrichtungen zu verzichten.

Die möglichst geringe Masse von Fangverzahnungen und Kupplungskörpern mit einer vorzugsweise angefederten Anordnung schafft eine dynamisch günstige Fang- und Einspurmechanik, um ein Einfangen der Zahnräder bei hoher Drehzahldifferenz und ein sicheres Einspuren in die jeweilige Gegenverzahnung zu erreichen bei geringstem Verschleiß der Verzahnungen.
Eine in Umfangsrichtung drehelastische Anordnung der Fangverzahnung kann eine weitere Verbesserung des Dämpfungsverhaltens beim Einspuren der Fangverzahnung darstellen.

Die Fangverzahnungen können an den Zahnrädern auch so angeordnet sein, daß sie auf den Zahnrädern verdrehbar sind, wenn ein hohes, definiert vorgegebenes Reibmoment überschritten wird. Dieses Reibmoment liegt höher als das Reibmoment in dem Lamellenpaket. Durch das Verdrehen können hohe Aufprallspitzen der Fangverzahnung gedämpft werden.

Die Verwendung von Reiblamellen mit Papierbelägen, die zu einem Paket zusammengefaßt für zwei Gangstufen gemeinsam nutzbar sind, schaffen einen Kostenvorteil. Ebenso sind diese weitaus umweltverträglicher als beispielsweise Lamellen mit Molybdänreibschichten. Eine optimale Lösung in der Art der Lamellengestaltung stellt eine Lamelle dar, deren Haftreibwert kleiner als ihr Gleitreibwert ist.

Ebenfalls verbilligt das Weglassen einer Sperrvorrichtung die Synchronisierung, ganz abgesehen von der Vermeidung aller häufig auftretenden Sperrprobleme.

### Bezugszeichen

- 2: Synchronisierung
- 4: Getriebewelle
- 6: Zahnrad
- 8: Zahnrad
- 10: Nadellager
- 12: Synchronkörper
- 14: Verzahnung
- 16: Kupplungskörper
- 18: Federeinrichtung
- 20: Kupplungskörper
- 22: Federeinrichtung
- 24: Kupplungsverzahnung
- 26: Kupplungsverzahnung
- 28: Außenverzahnung
- 30: Schiebemuffe
- 32: Kupplungsverzahnung
- 34: innerer Lamellenträger
- 36: äußerer Lamellenträger
- 38: Außenverzahnung
- 40: Lamellenpaket
- 42: Tellerfeder
- 43: Innenverzahnung
- 44: Bauteil
- 46: Bauteil
- 50: Fangeinrichtung
- 52: Innenverzahnung
- 54: Außenverzahnung
- 56: Sicherungsrinq
- 58: Wellfeder
- 60: Fangverzahnung
- 62: Fangverzahnung
- 64: Schaltgabel
- 66: Fangeinrichtung
- 68: Innenverzahnung
- 70: Außenverzahnung
- 72: Sicherungsring
- 74: Wellfeder
- 76: Fangverzahnung
- 78: Sperrflanken
- 80: Vernietung

## Patentansprüche

1. Synchronisiereinrichtung (2) für drehmomentübertragende Bauteile eines Schaltgetriebes, zur Verbindung einer Getriebewelle (4) mit einem auf der Getriebewelle (4) drehbar gelagerten Zahnrad (6, 8), mit einer Schiebemuffe (30), die einen äußeren Lamellenträger (36), der mit einer Schalteinrichtung (64) verbunden ist, und einen inneren Lamellenträger (34) aufweist, wobei zwischen den Lamellenträgern (34, 36) ein Lamellenpaket (40) vorgesehen ist, von dem jeweils aneinander anliegende Lamellen abwechselnd entweder mit dem inneren Lamellenträger (34) oder mit dem äußeren Lamellenträger (36) verbunden sind und bei Drehzahlungleichheit zwischen dem äußeren Lamellenträger (36) und dem inneren Lamellenträger (34) mit den Lamellen ein Synchronmoment erzielbar ist, und der äuβere Lamellenträger (36) eine Einrichtung (62) aufweist zur Verbindung mit einer Einrichtung (60, 76) am Zahnrad (6, 8) nach einer axialen Verschiebung des äußeren Lamellenträgers (36) in Richtung auf das Zahnrad (6, 8), wobei diese Verbindung erzielt wird, bevor drehmomentübertragende Kupplungsverzahnungen (24, 26, 32) zwischen innerem Lamellenträger (34) und Zahnrad (6, 8) in Verbindung treten, dadurch **gekennzeichnet,** daß der innere Lamellenträger (34) ständig drehfest mit der Getriebewelle (4) verbunden ist und ein Federelement (42) vorgesehen ist, das dazu geeignet ist, eine ständig auf das Lamellenpaket (40) einwirkende Kraft zur Erzielung des Synchronmomentes bei Verdrehung der Lamellen aufzubringen.

2. Synchronisiereinrichtung nach Anspruch 1, dadurch **gekennzeichnet,** daß die Synchronisiereinrichtung (2) mit einer automatisierten Schalteinrichtung verbunden ist.

3. Synchronisiereinrichtung nach Anspruch 1 oder 2, dadurch **gekennzeichnet,** daß die Einrichtung (60, 62, 76) zur Verbindung von äußerem Lamellenträger (36) und Zahnrad (6, 8) eine Sperrvorrichtung (78) aufweist, die bei einer Drehzahldifferenz zwischen der Kupplungsverzahnung (32) an der Schiebemuffe (30) einerseits und der Kupplungsverzahnung (24, 26) an dem Kupplungskörper (16, 20) andererseits oberhalb eines vorgebbaren Wertes ein Auftreffen der Kupplungsverzahnungen (24, 26, 32) aufeinander verhindert.

4. Synchronisiereinrichtung nach Anspruch 1 oder 2, dadurch **gekennzeichnet,** daß die Zeitdifferenz zwischen dem Aufeinandertreffen der Einrichtung (60, 62, 76) zur Verbindung von äußerem Lamellenträger (36) und Zahnrad (6, 8) und dem Aufeinandertreffen der Kupplungsverzahnungen (24, 26, 32) derart vorgegeben ist, daß bei einer Drehzahldifferenz zwischen der Kupplungsverzahnung (32) an der Schiebemuffe (30) einerseits und der Kupplungsverzahnung (24, 26) an dem Kupplungskörper (16, 20) andererseits oberhalb eines vorgebbaren Wertes ein Auftreffen der Kupplungsverzahnungen (24, 26, 32) aufeinander verhindert wird.

5. Synchronisiereinrichtung nach Anspruch 1 oder 2, dadurch **gekennzeichnet,** daß eine Kupplungsverzahnung (24, 26, 32) vorgesehen ist, die zur Begrenzung eines Einspurstoßes derart gestaltet ist, daß bei einer Drehzahldifferenz zwischen der Kupplungsverzahnung (32) an der Schiebemuffe (30) einerseits und der Kupplungsverzahnung (24, 26) an dem Kupplungskörper (16, 20) andererseits oberhalb eines vorgebbaren Wertes einer Drehzahldifferenz ein Abweisvorgang der Kupplungsverzahnungen (24, 26, 32) ein Einkuppeln verhindern.

6. Synchronisiereinrichtung nach wenigstens einem der vorherigen Ansprüche, dadurch **gekennzeichnet,** daß die Kupplungsverzahnung (24, 26, 32) stumpfe Enden aufweist.

7. Synchronisiereinrichtung nach wenigstens einem der vorherigen Ansprüche, dadurch **gekennzeichnet,** daß die Kupplungsverzahnung (24, 26, 32) durch ein Federelement (18, 22) axial angefedert ist.

8. Synchronisiereinrichtung nach wenigstens einem der vorherigen Ansprüche, dadurch **gekennzeichnet,** daß die Einrichtung (60, 62, 76) zur Verbindung von äußerem Lamellenträger (36) und Zahnrad (6, 8) mit Verzahnungen (52, 54, 68, 70) am Zahnrad (6, 8) drehfest angeordnet ist.

9. Synchronisiereinrichtung nach wenigstens einem der vorherigen Ansprüche 1 bis 7, dadurch **gekennzeichnet,** daß die Einrichtung (60, 62, 76) zur Verbindung von äußerem Lamellenträger (36) und Zahnrad (6, 8) mit einem definiert vorgegebenen Reibmoment verdrehbar am Zahnrad (6, 8) angeordnet ist.

10. Synchronisiereinrichtung nach wenigstens einem der vorherigen Ansprüche, dadurch **gekennzeichnet,** daß die Einrichtung (60, 62, 76) zur Verbindung von äußerem Lamellenträger (36) und Zahnrad (6, 8) mit stumpfen Enden versehen ist.

11. Synchronisiereinrichtung nach wenigstens einem der vorherigen Ansprüche, dadurch **gekennzeichnet,** daß die Einrichtung (60, 62, 76) zur Verbindung von äußerem Lamellenträger (36) und Zahnrad (6, 8) durch ein Federelement (58, 74) axial angefedert ist.

12. Synchronisiereinrichtung nach wenigstens einem der vorherigen Ansprüche, dadurch **gekennzeichnet,** daß die Einrichtung (60, 62, 76) zur Verbindung von äußerem Lamellenträger (36) und Zahnrad (6, 8) in Umfangsrichtung drehelastisch ausgebildet ist.

13. Synchronisiereinrichtung nach wenigstens einem der vorherigen Ansprüche, dadurch **gekennzeichnet,** daß das Federelement (18, 22, 58, 74) eine Wellfeder ist.

14. Synchronisiereinrichtung nach wenigstens einem der vorherigen Ansprüche, dadurch **gekennzeichnet,** daß das Federelement (42) eine Tellerfeder ist.

15. Synchronisiereinrichtung nach wenigstens einem der Ansprüche 1 bis 13, dadurch **gekennzeichnet,** daß das Federelement, das geeignet ist, die ständig auf das Lamellenpaket (40) einwirkende Kraft aufzubringen, eine in Form einer Wellfeder ausgebildete Reiblamelle ist.

16. Synchronisiereinrichtung nach wenigstens einem der vorherigen Ansprüche, dadurch **gekennzeichnet,** daß das Lamellenpaket (40) aus Lamellen mit Papierbelägen besteht.

17. Synchronisiereinrichtung nach wenigstens einem der vorherigen Ansprüche, dadurch **gekennzeichnet,** daß das Lamellenpaket (40) aus Lamellen besteht, deren Beläge einen Haftreibwert aufweisen, der kleiner als ihr Gleitreibwert ist.

## Claims

1. Synchronising device (2) for torque-transmitting components of a shift gearbox, for connecting a transmission shaft (4) to a gear wheel (6, 8), which is rotatably mounted on the transmission shaft (4), with a sliding sleeve (30) comprising an outer disc carrier (36), which is connected to a shift device (64), and an inner disc carrier (34), wherein a stack of discs (40) is provided between the disc carriers (34, 36), abutting discs of which stack are in each case alternately connected either to the inner disc carrier (34) or to the outer disc carrier (36) and a synchronisation moment can be achieved with the discs when there is a difference in rotational speed between the outer disc carrier (36) and the inner disc carrier (34), and the outer disc carrier (36) comprises a device (62) for connection to a device (60, 76) at the gear wheel (6, 8) following an axial displacement of the outer disc carrier (36) in the direction of the gear wheel (6, 8), wherein this connection is achieved before torque-transmitting coupling tooth systems (24, 26, 32) between the inner disc carrier (34) and the gear wheel (6, 8) engage with one another, characterised in that the inner disc carrier (34) is permanently and non-rotatably connected to the transmission shaft (4), and a spring element (42) is provided which is capable of exerting a force acting permanently on the stack of discs (40) to achieve the synchronisation moment when the discs turn.

2. Synchronising device according to claim 1, characterised in that the synchronising device (2) is connected to an automated shift device.

3. Synchronising device according to claim 1 or 2, characterised in that the device (60, 62, 76) for connecting the outer disc carrier (36) and the gear wheel (6, 8) comprises a blocking device (78) which prevents the coupling tooth systems (24, 26, 32) from impinging on one another if there is a difference in rotational speed between the coupling tooth system (32) at the sliding sleeve (30) on the one hand and the coupling tooth system (24, 26) at the coupling body (16, 20) on the other above a predeterminable value.

4. Synchronising device according to claim 1 or 2, characterised in that the time difference between the impingement of the device (60, 62, 76) for connecting the outer disc carrier (36) and the gear wheel (6, 8) and the impingement of the coupling tooth systems (24, 26, 32) is predetermined such that the coupling tooth systems (24, 26, 32) are prevented from impinging on one another if there is a difference in rotational speed between the coupling tooth system (32) at the sliding sleeve (30) on the one hand and the coupling tooth system (24, 26) at the coupling body (16, 20) on the other above a predeterminable value.

5. Synchronising device according to claim 1 or 2, characterised in that a coupling tooth system (24, 26, 32) is provided which is formed to limit a meshing impact such that a deflection action of the coupling tooth systems (24, 26, 32) prevents engagement if there is a difference in rotational speed between the coupling tooth system (32) at the sliding sleeve (30) on the one hand and the coupling tooth system (24, 26) at the coupling body (16, 20) on the other above a predeterminable value of a rotational speed difference.

6. Synchronising device according to at least one of the preceding claims, characterised in that the coupling tooth system (24, 26, 32) has stub ends.

7. Synchronising device according to at least one of the preceding claims, characterised in that the coupling tooth system (24, 26, 32) is axially spring-loaded by a spring element (18, 22).

8. Synchronising device according to at least one of the preceding claims, characterised in that the device (60, 62, 76) for connecting the outer disc carrier (36) and the gear wheel (6, 8) is non-rotatably disposed at the gear wheel (6, 8) with tooth systems (52, 54, 68, 70).

9. Synchronising device according to at least one of the preceding claims 1 to 7, characterised in that the device (60, 62, 76) for connecting the outer disc carrier (36) and the gear wheel (6, 8) is disposed at the gear wheel (6, 8) such that it can turn with a definitely predetermined frictional moment.

10. Synchronising device according to at least one of the preceding claims, characterised in that the device (60, 62, 76) for connecting the outer disc carrier (36) and the gear wheel (6, 8) is provided with stub ends.

11. Synchronising device according to at least one of the preceding claims, characterised in that the device (60, 62, 76) for connecting the outer disc carrier (36) and the gear wheel (6, 8) is axially spring-loaded by a spring element (58, 74).

12. Synchronising device according to at least one of the preceding claims, characterised in that the device (60, 62, 76) for connecting the outer disc carrier (36) and the gear wheel (6, 8) is torsionally elastic in the circumferential direction.

13. Synchronising device according to at least one of the preceding claims, characterised in that the spring element (18, 22, 58, 74) is a corrugated spring.

14. Synchronising device according to at least one of the preceding claims, characterised in that the spring element (42) is a Belleville-type spring.

15. Synchronising device according to at least one of claims 1 to 13, characterised in that the spring element which is capable of exerting a force acting permanently on the stack of discs (40) is a friction disc in the form of a corrugated spring.

16. Synchronising device according to at least one of the preceding claims, characterised in that the stack of discs (40) consists of discs with paper linings.

17. Synchronising device according to at least one of the preceding claims, characterised in that the stack of discs (40) consists of discs whose paper linings have a static friction value which is lower than their sliding friction value.

## Revendications

1. Dispositif de synchronisation (2) pour des éléments transmettant le couple d'une boîte de vitesses permettant de relier un arbre de transmission (4) à une roue dentée (6, 8) montée de façon rotative sur l'arbre de transmission (4), comportant un manchon coulissant (30) présentant un support de disques externe (36) relié à un dispositif de commande (64), et un support de disque interne (34), un paquet de disques (40) étant prévu entre les supports de disques (34, 36), dans lequel des disques adjacents sont reliés alternativement soit avec le support de disques interne (34), soit avec le support de disques externe (36) et dans lequel, à égalité de vitesse de rotation entre le support de disques interne (34) et le support de disques externe (36), un moment synchrone peut être obtenu avec les disques, et dans lequel le support de disques externe (36) comporte un dispositif (62) pour la liaison avec un dispositif (60, 76) sur la roue dentée (6, 8) après un déplacement axial du support de disques externe (36) vers la roue dentée (6, 8), cette liaison étant obtenue avant que les engrenages (24, 26, 32) de l'embrayage transmettant le moment du couple entre le support de disques interne (34) et la roue dentée (6, 8) entrent en liaison, **caractérisé** en ce que le support de disques interne (34) est en permanence relié de façon non rotative à l'arbre de transmission (4) et un élément ressort (42) étant prévu de façon à être apte à produire une force agissant en permanence sur le paquet de disques (40) afin d'obtenir le couple synchrone lors de la torsion des disques.

2. Dispositif de synchronisation selon la revendication 1, **caractérisé** en ce que l'organe de synchronisation (2) est relié à une boîte de vitesses automatisée.

3. Dispositif de synchronisation selon la revendication 1 ou 2, **caractérisé** en ce que le dispositif (60, 62, 76) pour la liaison entre le support de disques externe (36) et la roue dentée (6, 8) comporte un dispositif d'arrêt (78) qui, en cas d'une différence de la vitesse de rotation entre l'engrenage de l'embrayage (32) sur le manchon coulissant (30) d'une part, et l'engrenage de l'embrayage (24, 26) sur le corps de l'embrayage (16, 20) d'autre part, au-delà d'une valeur programmable, empêche le contact des engrenages d'embrayage (24, 26, 32) entre eux.

4. Dispositif de synchronisation selon la revendication 1 ou 2 **caractérisé** en ce que la différence de temps entre le contact du dispositif (60, 62, 76) pour la liaison du support de disques externe (36) et la roue dentée (6, 8) et le contact des engrenages de l'embrayage (24, 26, 32) est prédéterminé de telle manière qu'en cas d'une différence de vitesse de rotation entre l'engrenage d'embrayage (32) sur le manchon coulissant (30) d'une part, et de l'engrenage d'embrayage (24, 26) sur le corps d'embrayage (16, 20) d'autre part, au-delà d'une valeur programmable, un contact entre les engrenages d'embrayage (24, 26, 32) soit empêché.

5. Dispositif de synchronisation selon la revendication 1 ou 2, **caractérisé** en ce qu'un engrenage d'embrayage (24, 26, 32) est prévu qui, pour la limitation d'un coup d'engrenure, est conçu de manière qu'en cas d'une différence de la vitesse de rotation entre l'engrenage de l'embrayage (32) sur le manchon coulissant (30) d'une part, et l'engrenage d'embrayage (24, 26) sur le corps de l'embrayage (16, 20) d'autre part, au-delà d'une valeur de la différence de la vitesse de rotation programmable, un processus de refus des engrenages d'embrayage (24, 26, 32) empêche l'accouplement.

6. Dispositif de synchronisation selon au moins l'une des revendications précédentes, **caractérisé** en ce que le l'engrenage d'embrayage (24, 26, 32) présente des extrémités tronquées.

7. Dispositif de synchronisation selon au moins l'une des revendications précédentes, **caractérisé** en ce que l'engrenage d'embrayage (24, 26, 32) est axialement soumis à l'action d'un élément à ressort (18, 22).

8. Dispositif de synchronisation selon au moins l'une des revendications précédentes, **caractérisé** en ce que le dispositif (60, 62, 76) pour la liaison du support de disques externe (36) et la roue dentée (6, 8) est agencé de façon non rotative au moyen de dentures (52, 54, 68, 70) sur la roue dentée (6, 8).

9. Dispositif de synchronisation selon au moins l'une des revendications précédentes, **caractérisé** en ce que le dispositif (60, 62, 76) pour la liaison du support de disques externe (36) à la roue dentée (6, 8) est agencé avec un moment de frottement défini prédéterminé et de manière à pouvoir tourner sur la roue dentée (6, 8)

10. Dispositif de synchronisation selon au moins l'une des revendications précédentes, **caractérisé** en ce que le dispositif (60, 62, 76) pour la liaison du support de disques externe (36) à la roue dentée (6, 8) est pourvu d'extrémités tronquées.

11. Dispositif de synchronisation selon au moins l'une des revendications précédentes, **caractérisé** en ce que le dispositif (60, 62, 76) pour la liaison du support de disques externe (36) à la roue dentée (6, 8) est axialement soumis à l'action d'un élément à ressort (58, 74).

12. Dispositif de synchronisation selon au moins l'une des revendications précédentes, **caractérisé** en ce le dispositif (60, 62, 76) pour la liaison du support de disques externe (36) à la roue dentée (6, 8) est conçu de façon à être élastique à la torsion dans le sens périphérique.

13. Dispositif de synchronisation selon au moins l'une des revendications précédentes, **caractérisé** en ce l'élément à ressort (18, 22, 58, 74) est une rondelle ondulée.

14. Dispositif de synchronisation selon au moins l'une des revendications précédentes, **caractérisé** en ce l'élément à ressort (42) est une rondelle-ressort.

15. Dispositif de synchronisation selon au moins l'une des revendications 1 à 13, **caractérisé** en ce que l'élément ressort qui est apte à fournir la force agissant en permanence sur le paquet de disques (40) est une lamelle de friction conçue sous la forme d'un ressort de friction.

16. Dispositif de synchronisation selon au moins l'une des revendications précédentes, **caractérisé** en ce que le paquet de disques (40) consiste en lamelles pourvues d'un revêtement en papier.

17. Dispositif de synchronisation selon au moins l'une des revendications précédentes, **caractérisé** en ce que le paquet de disques (40) est composé de lamelles dont le revêtement présente un coefficient d'adhérence inférieur à leur coefficient de frottement par glissement.
